# EUROPEAN PATENT SPECIFICATION

(11) **EP 2 509 774 B1**
(45) Date of publication and mention of the grant of the patent: **24.09.2014**
(21) Application number: 10807730.6
(22) Date of filing: 07.12.2010
(51) Int. Cl.: B29C 70/24, B29C 70/08, B29C 70/86, F16B 5/00, B29D 99/00

(54) **Sandwich panel and method for its manufacture**
Sandwichplatte und Verfahren zu deren Herstellung
Panneau sandwich et procédé de sa fabrication

(30) Priority: 07.12.2009 BE 200900754; 16.06.2010 EP 10166128
(43) Date of publication of application: 17.10.2012
(73) Proprietor: Groep Stevens International, 9160 Lokeren (BE)
(72) Inventor: VERHAEGHE, Jan, B-9120 Beveren (BE)
(74) Representative: Algemeen Octrooi- en Merkenbureau B.V.
(86) International application number: PCT/IB2010/055638
(87) International publication number: WO 2011/070511

(56) References cited:
- WO-A1-03/011577
- US-B1- 6 187 411

## Description

### Field of the invention.

The invention relates to a sandwich panel comprising a core with a first and second opposite surface, where the first surface is provided with at least one sheet of a fibrous reinforcing material, wherein the second surface is provided with at least a second sheet of fibrous reinforcing material, according to the preamble of the first claim.

The invention also relates to a process for producing such a sandwich panel and to a set of a first and second sandwich panel which are connect to each other.

### Background of the invention.

WO03097335 discloses a sandwich panel comprising a core of foamed synthetic material, wherein the upper and lower side are covered with an upper and lower sheet of fibrous reinforcing material, respectively. The upper and lower sheet and the core are connected to each other by means of continuous fibers, which extend in the height direction of the panel and which are connected to each other on the upper and lower surface of the panel in the displacement direction of the panel through the tuft-machine. The panel is impregnated with a resin. In production of the sandwich panel, a panel of foamed synthetic material is supplied and on the upper and lower surface of the foamed synthetic material at least one sheet of fibrous reinforcing material is applied. The layers are connected to each other by means of continuous fibers which extend in the height direction of the panel. The continuous fibers are applied up to a distance of the edge of the panel, which extend in the displacement direction of the panel. After applying the continuous fibers, the panel is impregnated with a curable resin and the resin is cured.

This sandwich panel, however, presents the disadvantage that the sheets of fibrous reinforcing material and especially the edges thereof, can shift locally, fold or coil during the production process, both at the level of the upper and lower side of the structure as well as at the level of the upright edges. This precludes the reproducibility of the process and delivers sandwich panels with locally varying mechanical properties and thickness. There is a risk that during impregnation of the sandwich structure with resin, the resin runs out of the structure, foams and locally accumulates on the sides and/or the upper and lower surface of the panel, with jamming of the machine and production errors as a result.

US-B1-6.187.411 discloses a stitch-reinforced sandwich panel in accordance with the preamble of claim 1 comprising a rigid closed cell core which is sandwiched between a pair of skins made of structural fiber material. The skins are secured to the outer faces of the core by means of stitches of synthetic fiver threads. The stitching occurs in rows, the stitches in each row are parallel to one another in that row. The skins may be resin impregnated. The foam core may take the form of a plurality of discrete foam beds, which are overlayed by the skins. At the position between the foam beds, the skins run along each other and are connected by stitches.

### Object of the invention.

It is the object of the present invention to provide a panel and a process for producing said panel, with a reduced risk for production errors to occur.

This is achieved according to the invention with the technical features of the characterizing part of the first claim.

Thereto, the sandwich panel of the present invention comprises a core with an opposing first and second surface, in which the first surface is provided with at least a first sheet of a fibrous reinforcing material, the second surface being provided with at least a second sheet of a fibrous reinforcing material, wherein at least a first part of the first sheet of fibrous reinforcing material which protrudes with respect to a first edge of the first surface, and at least a second part of the second sheet of fibrous reinforcing material which protrudes with respect to a second edge of the second surface opposing the first edge, are adjacently positioned to define an overlapping part in which the first and second sheet at least partially overlap, in which the first part of the first sheet and the second part of the second sheet are connected in at least a part of the overlap part by means of connecting fibers of fibrous reinforcing material, characterized in that the overlap part is folded back along an upright side of the core at a distance from the upright side. The first part of the first sheet and the second part of the second sheet may be fully or partially overlapping.

By feeding the first and second sheet of fibrous reinforcing material, the first and second sheet are positioned relative to the core and each other in a desired position.

The connection of the first and second sheet fibrous reinforcing material into the desired assembly in the overlapping part through connecting fibers, allows
- to fix unambiguously the position of the sheets along the edge of the sandwich structure and to maintain them in this position during the subsequent process steps in the impregnation of the sandwich structure with resin, during curing of the resin, possibly in a mold, and during any other next steps
- to fix unambiguously the position of the sheets relative to each other and relative to the core in the sandwich structure and to maintain them in this position during the step of impregnating with resin, the curing of the resin, possibly forming in a mold and other possible next steps
Because of the connection along the edge shifting or moving the sheets with respect to each other and the core is thwarted throughout the sandwich structure. The inventors have found that especially when pultrusion is used as a technique for the impregnation of the sandwich structure with resin, there is a risk of local shifting, moving or deforming parts of the sheets of fibrous reinforcing material, especially along the edges of the sandwich structure as a result. A displacement or deformation of the sheets fibrous reinforcing material along the edges often extends into the inner regions of the sandwich structure, with production errors, not only along the border but also in the more centrally located parts of the sandwich panel. This is undesirable and can be avoided with this invention. In order to provide a sandwich panel with optimum mechanical properties such as compressive strength, bending strength and shear it is important that the sheets fibrous reinforcing material are correctly positioned and present no undesirable deformation neither along the upper and lower surface nor along the edges, before the sandwich structure is impregnated with resin. .

Especially near the edges of the fibrous reinforcing material and upright sides of the core there is a risk that the fibrous reinforcing material shifts, fold, rolls, etc. by which local material thickening can occur and the core locally cannot be covered with fiber-like reinforcing material. The connection thwarts such distortion and allows for unambiguous determination of overlapping edge as part of the sandwich structure which form a single piece with the sandwich structure. It is also possible to connect a function to the edge.

As the sheets of fibrous reinforcing material extend beyond the upright sides of the core, the risk of damaging the sheets of fibrous reinforcing material and the core along the edges is minimized, in the course of applying the connection fibers and further processing of the sandwich panel to a functional part. The connection achieves for example, that the risk decreases that bent or rolled ends of the slab in the upright side of the foam core are squeezed with constriction at the upright side as a result.

In the sandwich panel of the present invention it is made possible that the fibrous reinforcing material not only extends along an upper and a lower surface of the panel, but also along at least two opposite upright sides. This improves the uniformity of the mechanical strength and mechanical properties of the panel.

The presence of the overlap part also enables the application at the location of the core material, of connecting fibers over the entire distance between two overlapping edges of the core, thus from edge to edge. Thus the same strength is ensured along the edges and in the middle of the panel. In the state of the art-known panel on the other hand there was a risk of erosion along the edges of the core and loss of cohesion of the fibrous reinforcing material while applying connecting fibers along the edges.

The fibrous reinforcing material thus connected in an overlap part, provides a space which defines the limits within which resin can flow during the impregnation of the sandwich structure with resin, before the resin is cured. This will reduce the risk that the resin flows out of the sandwich structure to a surface of the sandwich panels and foams. Thus, the risk of the occurrence of production errors and jamming of the production machine is minimized.

A preferred embodiment of the sandwich panel of this invention is characterized in that the first part of the first sheet and the second part of the second sheet in at least a part of the overlap part connected by means of continuous connecting fibers of fibrous reinforcing material.

Thus it is possible to connect the columns of connecting fibers extending in the height direction to each other along the surface of the core, increasing the strength of the sandwich panel. Preferably, successive columns are connected along two opposite surfaces of the core.

The connecting fibers in the overlap part extend preferably in one or more directions selected from a height direction of the sandwich panel or at one or more angles with respect to a height direction of the panel or in a combination of two or more of these directions. This makes the sandwich structure resistant against pulling which would move the different layers apart, both during production of the sandwich panel as In the finished sandwich panol, and better mechanical properties and an increased pressure and shear strength are provided. Mechanical strength and compressive strength in the height direction can be further improved if at least part of the connecting fibers are extending at an angle relative to the height of the sandwich panel. The connecting fibers which extend in the height direction of the panel provide a plurality of columns in the height direction of the sandwich panel. Successive columns are connected to each other along the surface of the sandwich panel in at least one direction. The connecting fibers are thus applied as a plurality of rows of columns, connected to each other by connecting fibers. The overlap part extends preferably in the direction of these rows of interlocking connecting fibers.

This invention also relates to a method for producing a sandwich panel, in which a core is supplied in a displacement direction, whereby at least a first and second sheet of a fibrous reinforcing material is supplied to a first and second opposing surface of the core, respectively, wherein
a first part of the first sheet which protrudes with respect to a first edge of the first surface of the core and
a second part of the second sheet which protrudes with respect to a second edge of the second surface of the core opposing the first edge,
are adjacently positioned so that they at least partially overlap and an overlap part is determined at the core, and in that the first and second part in at least a part of the overlap part are connected by means of connecting fibers of a fibrous reinforcing material, characterized in that the overlap part is folded back along an upright side of the core at a distance from the upright side.

In the method of the present invention, the first sheet, the core and the second sheet are preferably also at least partially connected to each other by means of connecting fibers of a fibrous reinforcing material extending in the height direction of the sandwich structure.

Next, the sandwich panel is preferably impregnated with a resin such as a curable thermosetting resin which is cured or a thermoplastic material using pultrusion.

A set of a first and a second sandwich panels can be connected along their adjacent upright sides.

Connecting two or more adjacent composite panels for creating a large area, for example for use as road surfaces, as a floor for a bridge or runway for aircraft, usually with a temporary character, is in itself known. To obtain a connection of sufficient strength, in most cases, an aluminum profile is applied in the adjacent upright side wall of each panel, which includes a recess in which for example an eight-shaped profile fits for connecting the panels.

Panels using this connection method, however, have the disadvantage that delamination occurs readily under shear loading, especially at the interface between aluminum and fiber-reinforced skin layer.

An object is to provide a connection system for composite panels, which does not affect the bending strength and mechanical strength of the panel and is less subject to delamination.

This objective is achieved by a panel or a set of panels comprising a first sandwich panel according to the invention, provided with first connecting means extending along at least a part of a first upright side wall of the first sandwich panel, a second sandwich panel according to the invention provided with second connecting means extending along at least part of a second upright sidewall of the second sandwich panel for connecting the first and second sandwich panel, characterized in that the first connecting means are at least partially executed as a single piece with the first sandwich panel and second connecting means at least partially executed as a single piece with the second sandwich panel.

By implementing the connecting means as a single piece with the rest of the panel, it is possible to minimize the risk of loosening of the connecting means under load with respect to the panel, extending the useful life and load capacity of interconnected panels. The weight gain of the panel by the presence of the connecting means can be minimized, where the presence of additional profiles made of materials foreign to the panel, such as aluminum, usually entails an excessive weight gain. Another advantage is that the process of producing this panel is facilitated by executing the connecting means in a single piece with the panel, since there is no need to incorporate profiles that are alien to the panel. This allows the panel to be produced in a single continuous process, with minimal manual intervention, reducing the risk of errors, and minimizing the increase in production costs.

Preferably, the part of the first and second connecting means which is at least partially executed as a single piece with respectively the first and the second sandwich panel is substantially, or even fully, made of at least a part, preferably a substantial part, of the overlap part of respectively the first and the second sandwich panel.

The invention is further explained in the attached figures and figure description.
Figure 1A - C show possible embodiments of the sandwich panel.
Figure 2 illustrates a problem that occurs in producing the sandwich panel of this invention.
Figure 3A - 3D shows a first preferred embodiment of the set according to the invention. Shown are first connecting means of a first sandwich panel, second connecting means of a second sandwich panel, and third connecting means.
Figure 4A - 4D shows a second preferred embodiment of the set according to the invention. Shown are first connecting means of a first sandwich panel, second connecting means of a second sandwich panel, and third connecting means.
Figure 5 shows a third preferred embodiment of the set according to the invention. Shown are first connecting means of a first sandwich panel and second connecting means of a second sandwich panel.
Fig. 6 shows an example of rows of connected connecting fibers.
Figure 7 shows a view of the sandwich panel of the present invention, in disassembled parts.
Figure 8 shows a third preferred embodiment of the set according to the present invention. First connecting means of a first sandwich panel, second connecting means of a second sandwich panel and third connecting means are shown. in

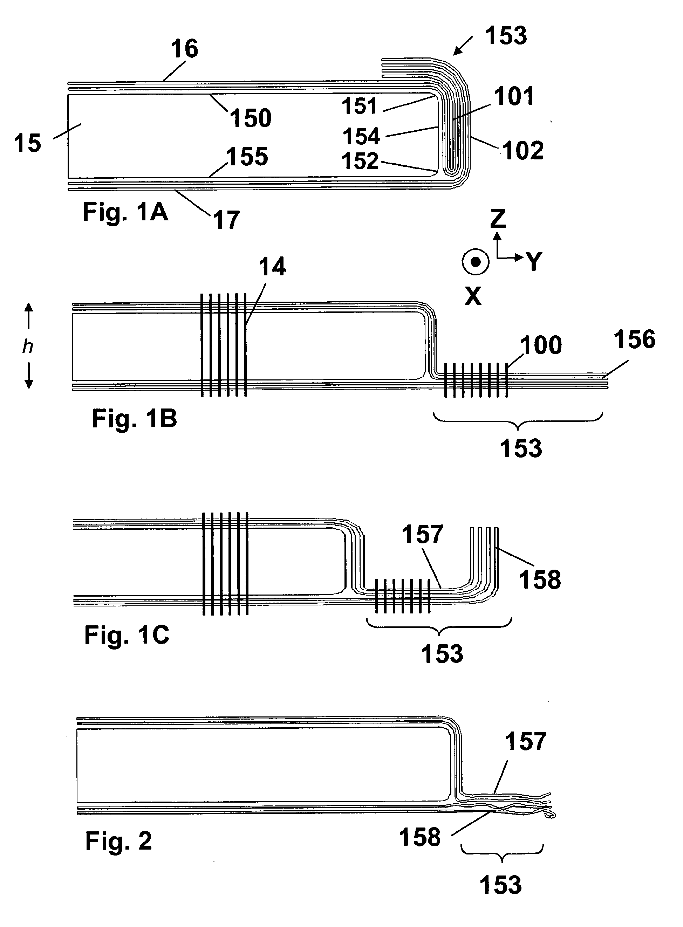

The sandwich panel shown in Figure 1A and B is made of composite material, and includes a first and a second sheet of fabric 16, 17 of a fibrous reinforcing material to form a first and second skin of the sandwich panel. Between the first and second skin there is a layer of a core material 15. Instead of a tissue, a fleece, a mat, a fabric of fiber-like reinforcing material may also be used or any other sheet deemed appropriate by the person skilled in the art. The first and second skin can be made from the same material, they can also be made from different materials. The first skin can be made from one sheet- like layer of a material as described above, or two or more adjacent layers of the same material or different materials.

To form the skin, several sheets are placed above each other, with two superimposed sheets overlapping completely. It is also possible for superposed sheets to only partially overlap, and for example to provide a crossed arrangement, or any other arrangement.

The panels shown in Figure 1A, B and C, at least a first section 101 of the first sheet 16 protrudes with respect to the core 15, especially with respect to a first edge 151 of the first or upper surface 150 of the core 15. At least a second section 102 of the second sheet 17 protrudes with respect to the core 15, particularly with respect to a second edge 152 lying opposite the first edge of the second or bottom surface 155 of the core 15.

The first part 101 may protrude over the same distance with respect to the core 15 as the second part 102, or over a different distance. The first 101 or second part 102, respectively can be independently protruding with respect to the core in the longitudinal and/or transverse direction of the core. The first and second parts 101 and 102 may extend longitudinally relative to the lateral edges of the core in transverse direction relative to the long edges of the core, or against each other edge or in any other direction. Preferably, the first and second parts 101, 102 protrude with respect to a long edge of the core, i.e. the edge which extends in the displacement direction x in which the panel moves through the connecting fiber application apparatus. This allows the optimal integration of formation of protrusions.

The first 101 and second part 102 of respectively the first and second sheets 16, 17 are positioned so that they at least partially overlap and thereby define an overlap part 153. The first and second parts 101, 102 may fully or partially overlap. Overlap may occur in longitudinal or transverse direction of the overlap section 153, or in any other direction or a combination of two or more directions. Preferably, the first and second part overlap fully or partly in longitudinal and transverse direction of the overlap section 153.

In the overlap part 153, the first and second parts 101, 102 may be directly, or nearly adjacent, or positioned at a distance from each other, whereby one or more interlayers of a further material are applied between the first and second part 101, 102. The intermediate layer may be executed in each material deemed suitable by the person skilled in the art, and could be a film, mat, fabric or any other sheet of a fibrous reinforcing material, but also a foam panel, for example a synthetic foam can be suitably used. In at least some part of the overlap part, the first and second parts 101, 102 are connected by connecting fibers 100. Connecting fibres can be applied, made for connecting the first and second parts 101, 102 over the entire overlap part 153 or only part thereof.

Depending on the intended application, the overlap part 153 can be provided at different positions relative to the upright side: for example near the upper side of the core or panel, for example at the lower side of the core or the panel as shown in Figure 1b and 1C, or at any position in between. Depending on the intended application, the overlap part 153 can be provided at different positions relative to the upright side 154: for example, directly adjacent to the upright side 154 or at a distance therefrom. In the latter case, the space between the core and the overlap part is usually filled by another material to ensure that the initial position of the top and bottom sheets is maintained.

The overlap part 153 can simply protrude with respect to the upright side 154 of the core, as shown in Figure 1B. Further is the first sheet 16 folded from the first surface 150 of the core 15, along an upright side 154 of the core, adjacent to first surface, and then adjacent to a part of the second sheet 17 which protrudes with respect to the core 15 in the overlap part 153. The overlap part 153 may also be formed in a specific form, taking into account the intended application.

The overlap section 153 is folded back along the vertical side of the core towards the first surface 150 of the core, as shown in Figure 1A. In the in Figure 1A shown embodiment, the first sheet 16 is first folded from the first edge 151 of the first surface 150 of the core 15, along an upright side 154 of the core, adjacent to the first surface, toward the second surface 155 of the core. In this way, an overlap part 153 is provided in which a part of the first sheet 16 extends from the upright side 154 of the core 15, adjacent to the part of the second sheet 17 which also protrudes relative to the core 15. The overlap part 153 is then folded back along the upright side 154 of the core 15 towards the first or upper surface 150 of the core 15. After impregnation with resin, the overlap part 153 forms a single piece with the rest of the sandwich panel 1. The presence of fibrous reinforcing material 101, 102 along the vertical side 154 enables a significant improvement of the strength of the sandwich panel.

According to another embodiment shown in Figure 1C the overlap part 153 extends with respect to the core at the level of a bottom surface 155 of the core, and is a part of the overlap part 153 at a distance from the upright side 154 of the core 15 folded back towards the first surface 150 of the core 15. In that case, the overlap part is for example used as coupling means for connecting two or more sandwich panels. As part of the first sheet extends along the upright side 154 of the core, it enables a significant improvement of the strength of the sandwich panel.

The overlap part 153 has a tip 156, which functionally can be formed if desired.

An overlap part 153 as described above can be applied along one side of the sandwich panel. Preferably, however, such an overlap part is provided at opposite vertical sides of the sandwich panel, which extend in the direction x in which the sandwich structure is moved through the connecting fiber applicator apparatus. In this way the formation of the overlap part 153 can be integrated into a continuous sandwich panel production process, in which continuous core material and upper and lower sheets of fibrous reinforcing material are fed, are linked and are impregnated with resin. By providing such an overlap part 153, a sandwich panel can be obtained with uniform mechanical properties, e.g. compressive strength, bending strength and bending strength, over the entire surface of the panel.

Suitable materials for use as sheets of fibrous reinforcing material for the skin include fiberglass, synthetic fiber for example a polyester, polyamide, aramid and polyethylene fiber, carbon fiber, metal fibers, natural fibers such as cotton or flax, or a combination of two or more materials. The person skilled in the art is able to match the nature of the material to the intended use for the sandwich panel. The above materials have the advantage that their tendency to crumble is low and that they are not excessively brittle which would result in erosion along the edges when applying the connecting fiber. The fibrous reinforcing material is selected so that it is sufficiently stable at the temperature at which the sandwich structure is impregnated with resin and the temperature at which the resin is cured.

The core 15 is usually manufactured in a synthetic foam such as polyurethane foam, polypropylene foam, PVC foam, but any other material deemed suitable by the person skilled in the art may be used, such as a honeycomb core made of plastic or wood or metal or a metal foam. The material for the core is selected so that it is sufficiently stable at the temperature at which the sandwich structure is impregnated with resin and the temperature at which the resin is cured. The core can be produced from one layer of a pre-cited material. If desired, the core can be produced of several stacked layers of material, which are connected to each other. Successive layers can be composed from the same or different materials. Between successive layers, one or more layers of a fibrous reinforcing material can be applied. It is also possible to use as a core material synthetic foam wound in a sheet of a fibrous reinforcing material, or a plurality of such adjacent cores.

In the core 15, successive layers of a first sheet of fibrous reinforcing material, a core and second sheet of fibrous reinforcing material, can be connected through connecting fibers. The core can also be composed from a stacked plurality of such sets, which are interconnected by means of connecting fibers for example extending in z- or height direction of the sandwich panel, as described below.

The density of the material from which the core 15 is made, may vary within broad limits depending on the intended application. Materials with a higher density, e.g. above 40 or 50 kg / m³, can increase the strength of the sandwich panel. Materials with a lower density hardly make any contribution to the strength of the sandwich panel 1.

In the overlap part the first and second fabric 16, 17 and any intermediate layers are connected by means of connecting fibers 100. Preferably the connecting fibers 100 extend in height direction h also known as thickness direction or z direction of the sandwich panel. This is schematically shown in Figure 1B and 1C. The connecting fibers can be applied across the entire width in the y-direction, and the entire length in x-direction of the overlap part or over just a part of the width and/or longitudinal direction. Preferably, however, the connecting fibers are applied over almost the entire width and length of the overlap section 153, as this will benefit the uniformity of mechanical properties. If an overlap part 153 with varying properties is intended, it can be chosen not to locally apply connecting fibers.

In the sandwich panel, the first and second fabric 16, 17 and core 15 preferably also connected by means of connecting fibers 14 of fibrous reinforcing material. The connecting fibers extend preferably in the height direction h also known as thickness direction or z-direction of the panel. Connecting fibres can be applied to almost the entire length and width of the sandwich panel or parts thereof. If a sandwich panel with uniform mechanical properties is intended, reinforcing fibers are preferably distributed uniformly or almost uniformly over the sandwich panel. If a sandwich panel with varying mechanical properties is intended, it can be to chosen not to locally apply connecting fibers. Due to this connection 14, 100, the sandwich structure and the overlap part 153 are more resistant to tensile stress, moving the different layers apart, andshow a higher resistance to shear.

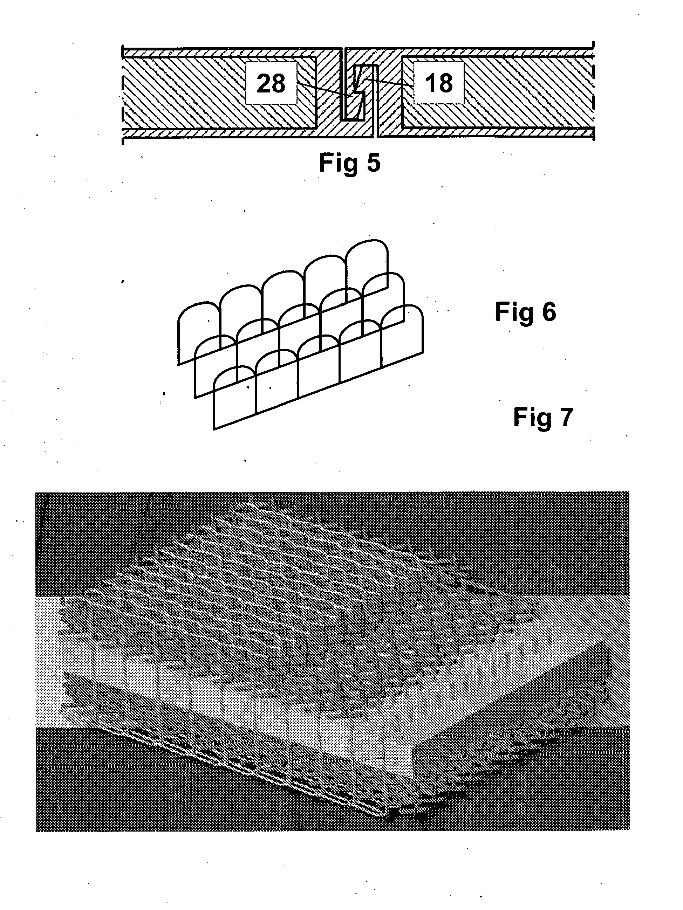

The connecting fibers 14, 100 provide a plurality of columns mounted at a distance from each other and extending in the height h or z-direction of the sandwich panel, or the overlap part 153, respectively. In the context of the present invention both continuous and discrete connecting fibers can be used. Preferably continuous connecting fibers are used, whereby at least a part of the ends of successive columns 14 are connected to each other in at least one direction, this can be the longitudinal or transverse direction of the sandwich panel. The connection between successive columns usually extends along the first surface 150 of the sandwich panel and along the first surface 157 of the overlap section 153. The connection between adjacent columns preferably also extends along the second surface 155 of the sandwich panel and along the second surface 158 of the overlap part. The connecting fibers are thus applied as a plurality of rows of columns of connecting fibers connected to each other. Five or eight such rows, respectively are shown in Figure 1B. In practice, successive columns are usually connected in the direction in which the sandwich structure is moved through the apparatus which applies the connecting fibers 14, 100. This is usually the length direction of the sandwich structure, as shown in Figure 6 and 7. It is also possible to connect the column fiber 14, 100 in two or more directions, in the longitudinal x, in transverse direction y and/or one or more additional directions at an angle of those directions. Preferably, successive columns connecting fibers of 14, 100 are connected, but locally an interruption in the connection may occur, without affecting the mechanical strength of the panel too much. One can also choose not to provide a local connection between adjacent columns connecting fibers to provide a panel with a varying controlled compressive strength, flexural strength and bending resistance to provide. The presence of a connection of the connecting fibers 14, 100 along the first 150 and preferably also along the second surface 155 of the core allows the mechanical strength of the sandwich panel to increase substantially.

The connecting fibers 14, 100 may extend substantially in the height direction of the sandwich panel as shown in Figure 1B. Further, the connection fibers 14, 100 may run substantially parallel to the upright side walls of the sandwich panel, or one or more directions at an angle to this direction, i.e. at one or more angles relative to the height h. This allows the mechanical properties and compressive strength of the sandwich panel to improve further. The connecting fibers 14, 100 can extend, for example at an angle of 30°, 45° or 60° with respect to the height or at any other angle deemed appropriate by the person skilled in the art. Within the context of this invention, it is also possible that connecting fibers 14, 100, extend at two or more different angles relative to the height of the panel, as shown in Figure 1C. The connecting fibers extend preferably over the entire height of the panel, i.e. from a top sheet 16, through the top sheet 16, the core 15 and a bottom sheet 17.

The connecting fibers 14, 100 will usually take the form of individual columns extending in the height direction h of the sandwich panel. The distance between adjacent columns may be chosen to be larger or smaller depending on the connecting technique used and the mechanical properties desired in the light of the intended application. Within the context of this invention, it is also possible in the sandwich panel and/or overlap part 153 to group a plurality of columns to provide a locally increased density of connecting fibers and thus additional local reinforcements such as shown in Figure 1C.

For connecting the upper and bottom sheets 16, 17 with the core 15, and for connecting the upper and bottom sheets 157, 158 of the overlap part 153 the same connecting fiber can be used, or different ones. Preferably, however, the same connecting fibers are used, because this allows for a simplified automation of the process.

If desired, to connect the core with the skin layers and to connect the layers within the overlap part, discrete fibers may be used as connecting fibers in the form of individual, disconnected columns, but preferably continuous fibers are used, with successive columns being interconnected, as described above. Suitable examples of continuous fibrous reinforcing materials include a rope, yarn, a strand, a band, etc. For connecting fibers 16, essentially the above-mentioned fibrous reinforcing materials can suitably be used such as fiberglass, synthetic fiber such as a polyester, polyamide, aramid and polyethylene fiber, carbon fiber, metal fibers, natural fibers such as cotton or flax, or a combination of two or more materials.

The connecting fibers 14, 100 can be applied using each technique considered suitable by the person skilled in the art, for example, sewing, quilting, tufting, knitting, or any derivative technique, or a combination of two or more of these techniques, or any other suitable technique for making continuous fibers. The use of these techniques implies that successive columns connecting fibers are connected in the direction in which the sandwich structure is moved through the apparatus. The mentioned connection techniques can be applied by automated apparatuses in a continuously operating system, using the above techniques or combinations thereof, or derivative techniques. A suitable technique for applying discontinuous fiber connection is described e.g. in US-A-3647606 and US5.741.574. According to this procedure for connecting the core and the skin small columns of one or more filaments that are partially coated with an adhesive material are used, which bind the thin columns to the surrounding material of the core. The thin columns can contain metallic or non-metallic wires or combinations thereof. The columns can be made from a porous solid, or they may be hollow inside.

For applying the connecting fibers, the sandwich panel is pierced, whereby a channel is formed, wherein of the connecting fibers are included.

Preferably, the first and second sheets 16, 17, the overlap part 153 and the connecting fibers 14, 100 are impregnated with resin to form a sandwich panel and to unite all parts of a structure based on the above sandwich structure. The resin will not only impregnate the aforementioned parts, but also fill the channels which were formed by applying the connecting fibers. Suitable resins for use in this invention are thermoplastic or thermosetting. Examples of suitable resins are unsaturated polyester resins, vinyl ester resins, epoxy resins, phenol resins, polyurethane resins. The resin is preferably selected so that it does not react with the material of the core 15 and the fiber-like reinforcing materials 16, 17, 14, 100, 101, 102.

In a preferred method for producing the above described sandwich panel 1, a material for providing the core 15 as described above, is supplied, and at a first and second opposing surface 150, 155 of the core, preferably the upper and the lower surface of the core, respectively, at least a first and second sheets 16, 17, of a fibrous reinforcing material is supplied. The first part 101 of the first sheet 16 which with respect to the first longitudinal edge 151 of the first surface 150 of the core 15 protrudes, is the edge which extends along a first upright side 154 in the displacement direction of the core, and the second part 102 of the second sheet 17 which with respect to the second longitudinal edge 152 of the second surface 155 of the core 15 opposing the first surface protrudes, is the edge which extends along a first upright side 154 in the displacement direction of the core, are positioned adjacently, so that they do overlap at least partially, preferably completely, and are then connected in the height direction h of the sandwich panel. Suitable techniques for establishing the connection are for example, sewing, sewing, knitting, tufting.

The connecting fibers extending in the height direction h can be applied over part or the whole width of the overlap part 153, this is the y-direction shown in Figure 1. The connection may extend over a part or the whole length of the overlap part 153, this is the x-direction shown in Figure 1. By the connection the first and second sheets 16, 17 are positioned at a predetermined position relative to each other and kept in this position throughout the rest of the production process, as long as the connection is maintained. More specifically, by the connection, the first and second sheets 16, 17 are positioned in a predetermined position relative to each other and kept in this position before the sandwich structure is impregnated with resin. In particular the first and second sheets 16, 17 are positioned in a predetermined position relative to each other and kept in this position during the displacement of the sandwich structure of the fiber application apparatus into and through the apparatus for the impregnation of the sandwich structure with resin, and any other movement, before the resin cured.

When establishing the connection, the first 101 and second 102 protruding parts are pierced. Thereto needles or equivalent means are generally used. The piercing implies that an area, often in the form of channels is created in which the connecting fibers 100 are included. The core 15 and at least first and second sheets 16, 17 fibrous reinforcing materials are preferably also connected to each other. Connecting fibers can be made using any technique considered suitable by the person skilled in the art e.g. by sewing, stitching, knitting, tufting. However, any other equivalent technique can be used. Preferably, a technique is used whereby the first and second sheets 16, 17, the core 15 are pierced by a fiber application apparatus, to provide a channel through which connecting fibers are drawn for connecting the core 15 and first and second sheets 16, 17. Thus, so to speak a plurality of successive columns of connecting fibers is formed. The connecting fibers 100 in the overlap section 153, and preferably also the connecting fibers connecting the first sheet, the core and the second sheet 14, 15, 16 can be applied in one or more directions selected from a height direction of the sandwich panel 1, 2 or at one or more angles to a height direction of the sandwich panel or a combination of two or more of these directions.

At least a part of the successive columns of connecting fibers are preferably connected to each other, in the direction in which the sandwich structure is moved with respect to the fiber connecting apparatus. This allows to form a plurality of parallel or unparallel rows of columns of connecting fibers, connected to each other, by moving the sandwich structure with respect to a connecting fiber application apparatus.

During the piercing, during the phase in which for example needles penetrate the overlap part 153 and/or the sandwich structure, respectively, the overlap part 153, or the sandwich structure, respectively preferably is not subjected to a displacement movement. In a phase in which the sandwich structure is not penetrated, the sandwich structure is preferably moved with respect to the fiber application apparatus. In this way the risk is minimized that too wide openings in the core and the skins of fibrous reinforcing material are formed, and too large spaces would be created for the inclusion of resin, which would affect the mechanical properties aversively and increase the weight of the sandwich panel unnecessarily. Because the first and second sheets 16, 17 are connected to each other to form an overlap part 153 on opposite sides of the sandwich panel, a volume is defined within which the flow of the resin to impregnate the sandwich structure with resin is limited. Thus, there is minimal risk that resin flows out of the sandwich panel, foams and jams the machine.

Connecting the first and second sheets 16, 15 and 17 with the core and connecting the first and second parts 101, 102 may be performed simultaneously or in separate process steps. Preferably, however, both connections are simultaneously performed since this process provides an economically more attractive process. More preferably, both connections are established using one machine.

The thus connected structure is preferably impregnated with a thermoplastic or a thermosetting resin to combine the first and second sheets 16, 17 and the core 15 to a single piece, as well as the first and second parts 150 and 155 in the overlap part 153. Usually this is done in a pultrusion process, in which the sandwich panel is moved when the connecting fiber application apparatus, most preferably in the form of needles, does not penetrate the sandwich structure and is drawn out from it. The resin penetrates the first and second sheets 16, 17, the first and second parts 101, 102 of the first and second sheets, respectively, the connecting fibers 14, 100 and the channels in which the connecting fibers are located. When using a thermosetting resin, the resin will usually be cured at elevated temperatures. The columns with connecting fibers thus filled with resin provide a high compressive strength and bending resistance to the sandwich panels.

Within the context of this invention it is possible to impregnate only the overlap part 153 with resin but preferably, the sandwich panel including the overlap part 153 is impregnated with resin.

The overlap part 153 provides a resin- impregnated strip which, possibly using a mold, may take any position and can be formed in any shape, taking into account the intended application.

The above described sandwich panel is suitable for a wide range of applications, for example as a panel for constructing walls, to construct a (temporary) runway, a bridge, to construct the deck of an aircraft carrier, etc.., These will usually temporary. The overlap section 153 may further be used as connecting means for connecting adjacent panels.

The invention also relates to a method for producing a sandwich structure as described above, which has not or not yet been impregnated with resin.

The invention also relates to the connected sandwich structure as described above which has not or not yet been impregnated with resin.

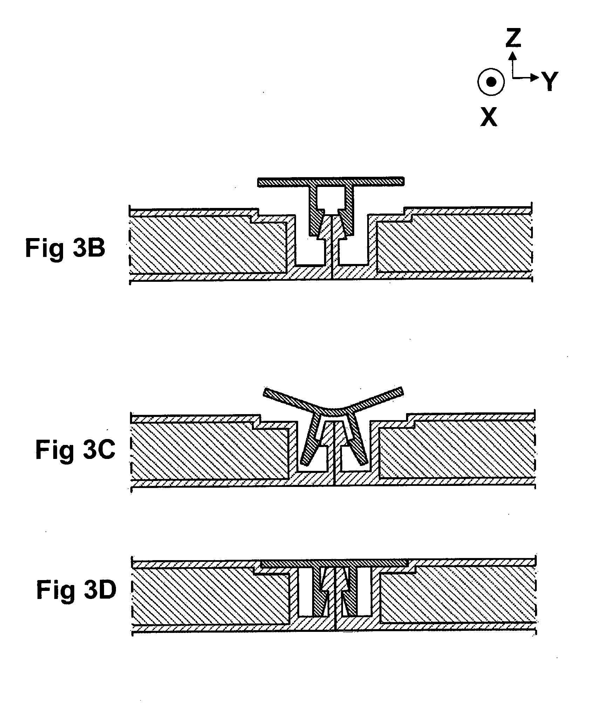

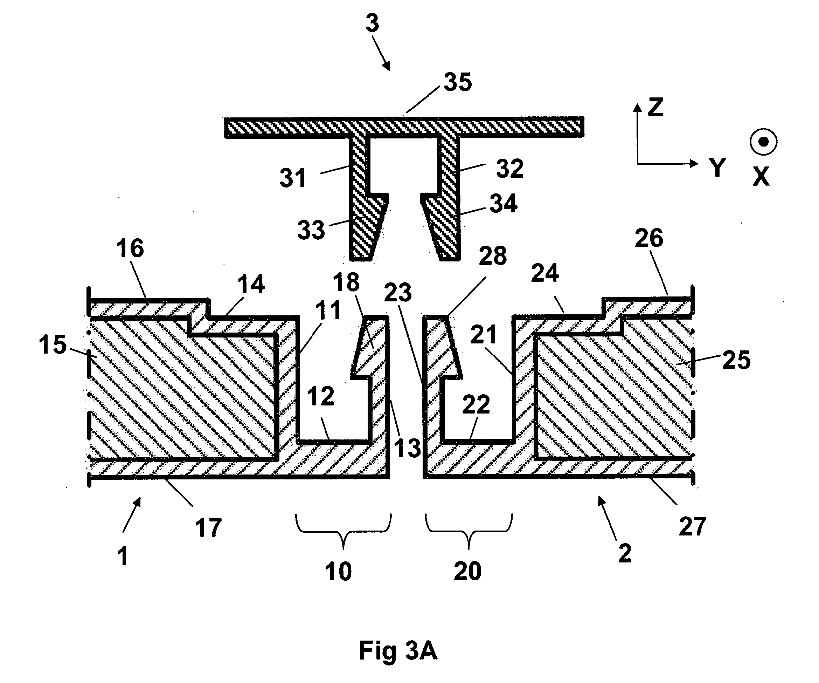

Fig. 3A shows a first preferred embodiment of a connection integrated in a sandwich panel according to the invention, in which a first and a second panel 1,2 are connected through a connector 3, 10, 20. The in Figure 3 shown set includes a first panel 1, with first connecting means 10 extending along a first upright side wall 11 of the first panel, a second panel 2, with second connecting means 20 extending along the second upright sidewall 21 of the second panel for connecting the first and second panel 1, 2, in which the first connecting means 10 are implemented as a single piece with the first panel and second connecting means 20 are implemented as a single piece in the second panel 2. The set includes preferably also third connecting means 3, in which the first and second connecting means 10, 20 on one hand and third connecting means 3 on the other hand comprise complementary cooperating parts, with the third connecting means 3 grip in the first and second connecting means 10, 20 in the connection direction and in height direction (h) of the panels 1, 2 for holding the first and second connecting means 10, 20 in an orientation such that they are facing each other.

In the embodiment of Figure 3, the first connecting means 10 comprise an overlap section 153 with a first wall section 12 which extends from the first upright side wall 11 towards the second panel 2. The first connecting means 10 further comprise a with the first wall section 12 associated protrusion 18 mounted at a distance from the first sidewall 11 and oriented in the height direction of the panel 1. In a practical embodiment the first connecting means 10 include a first wall part 12 running parallel with an upper surface 16 of the panel 1, which is connected with a second upright part 13, which at a free end is provided with a tooth-like protrusion or tooth 18 . One side of the tooth 18 of the first connecting means 10, directed to the first panel 1 is preferably chamfered. Instead of a tooth, any other form deemed suitable by the person skilled in the art can be used. Possibly more teeth 18 may also be provided on the upright section 13. The protrusion 18 is mounted at a distance from the first sidewall 11 in order to provide space for the inclusion of third connecting means 3, in particular the third protrusion 33 on the third connecting means 3. Protrusion 18 has an orientation in the height direction of panel 1. The second panel 2 has similar components but in mirror image of the first panel 1.

The third connecting means 3 includes a tab 35 which extends in the direction Y in which the connection between the first and second panel 1, 2 is established with respect to which a third and fourth protrusion 31, 32 extend in height direction Z of the panel. The third and fourth protrusions are at a distance from each other so that a space is provided for including the first and second connecting means 10, 20. The third and fourth protrusion 31, 32 may take for example the form of a first and second leg 31, 32, of which one end is attached to the tab 35 and the opposing end 33, 34 is profiled to cooperate with and to seize in the tooth-like protrusion 18 and 28 of the first and second connecting means 10, 20. The ends 33, 34, for example, may also take the form of a tooth. A to the first and second connecting means 10, 20 facing side of the third and fourth protrusion 33, 34 is preferably chamfered.

The third connecting means 3 can be executed in any material deemed suitable by the person skilled in the art, e.g. in metal or synthetic material, but they are preferably executed in a fibrous reinforced synthetic material. More preferably, the third connecting means are produced by pultrusion.

Figures 3B-3D show how a connection between the first and second panel shown in Figure 3A is practically achieved. In Fig 3C a force is exerted on the third connecting means 3 in its height direction and the direction of the panels. The bevelled sides of the teeth 33 and 34 of the third connecting means 3 are moved over corresponding bevelled sides 18, 28 of the first and second connecting means 10, 20. Through this operation, the panels 1, 2 are attracted towards each other. The function of the bevelled sides 18, 28 is to convert a vertical displacement of the third connecting means 3 and a vertical force into a horizontal displacement of the first and second panel 1, 2 where the first and second panel are drawn towards each other.

The third connecting means 3 are preferably executed such that as the vertical displacement of the third connecting means 3 increases, an elastic deformation takes place whereby the teeth 33 and 34 are moved apart. To facilitate this, the tab 35 of the third connecting means 3 are preferably not executed too thick so that this open-folding is possible, but not too thin so that the projected power needed for the horizontal and vertical displacement of panels 1, 2 with relative to each other, can be born. The configuration of the first and second connecting means 10, 20 is preferably such that they direct the open-folding of the third connecting means 3, as shown in Fig 3C. Note that Fig 3C is only a snapshot and this in order to establish this connection.

In the connected condition of Fig 3D, the free end of the third and fourth protrusion 33, 34 of the third connecting means rests on the first wall section 12, 22 of the first and second connecting means and the free ends of the first and second tooth 18, 28 are in contact with the side of the tab 35 of the third connecting means 3 directed at the first and second panel 1, 2. The third protrusion 33 in transverse direction grips in the first protrusion 18, and the fourth protrusion 34 grips in transverse direction in the second protrusion 28. The third and fourth protrusion 33, 34 exert a force pointed at each other on the first and second connecting means 10, 20, forcing them apart and make sure that the first and second panel are held together in the connection direction of the first and second panel. Because the third protrusion 33 also grips in height direction in the first connecting means 10, preferably in the first tooth 18, and the fourth protrusion 34 also grips in height direction in the second connecting means 20, preferably in the second tooth 28, and the first and second tooth 18, 28 and the third and fourth protrusion 33, 34 are clamped between tab 35 of the third connecting means and the wall sections 12 and 22 of the first and second connectors, is the displacement of the first and second panel relative to each other in the height direction hindered. The forces in horizontal XY and vertical directions Z are accommodated by the shown contact surfaces.

The first and second panel 1, 2 are preferably formed so that a recess 14 is present on the outer surface 16 for receiving the tab 35 so level differences between the panels 1, 2 and the third connecting means 3 can be reduced to a minimum.

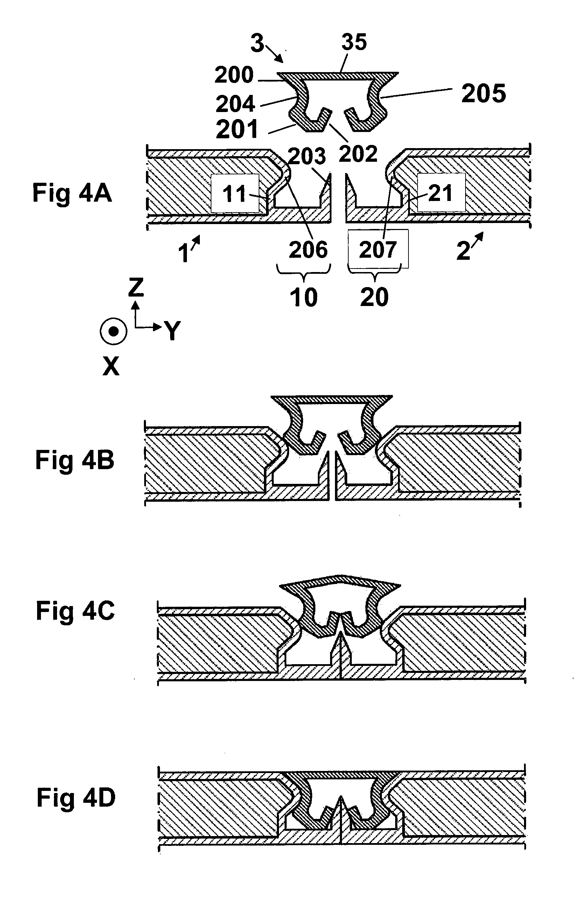

Fig 4A-D shows a second preferred embodiment of the set according to the invention. In Figure 4A the two panels 1, 2 are present next to each other. In Fig 4B, the third connecting means 3 is positioned above the two panels as shown in the figure. The bevelled sides of the first, second and third connectors make contact, and third connecting means 3 is positioned above and between the first and second panel. In Figure 4C a downward force is exerted on the third connecting means 3 and it is displaced in the direction of the first and second connecting means 10, 20 with the movement of the bevelled edge 201 along the upright and curved sidewall 11 of the first and second profile guided by the shape of the protrusion 206, 207. The third connecting means 3 thereby deform such that they are capable of overcoming the corresponding protrusion 206, 207 in the first and second connecting means 10, 20. Meanwhile, contact is established between the inner bevel 202 of the third connecting means 3 and the corresponding point 203 on the first and second connecting means 10, 20 of the first and second panel, until the third connecting means 3 are included in the space between the first and a second panel 1, 2. Because the protrusion 206, 207 in the upright sidewalls 11, 21 of the first and second panel is included in corresponding recesses 204, 205 in the third connecting means 3, the displacement of the panels relative to each other in height is hindered, just as a displacement in the connection direction. The tab 35 of the third connecting means is preferably sufficiently thin to enable the necessary elastic deformation, and sufficiently thick so that the predetermined force required for the horizontal and vertical displacement of the panels relative to each other, can be mitigated.

Figure 5 shows a third preferred embodiment of a connection according to the invention. This connection is very similar to that of Fig 1A, except that no third connecting means 3 is necessary and that the first tooth 18 of the first panel 1 points in a direction transverse to the connection direction along the panels, in the example a upward direction, and the second tooth 28 of the second panel 2 in downward direction.

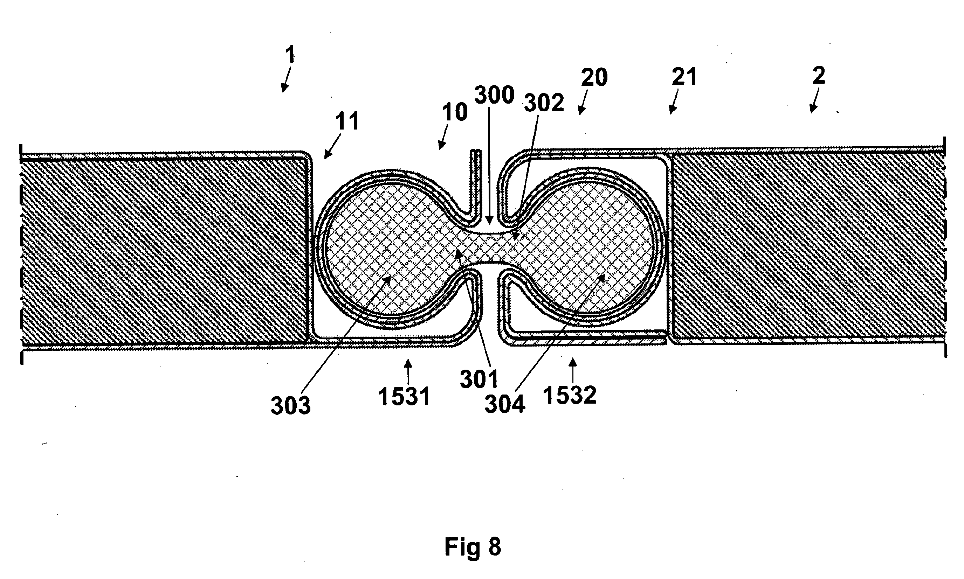

It is also possible to provide the first and second connecting means 10, 20 such that an eight-shaped profile 300, for example an eight-shaped profile 300 similar to the known eight-shaped profile which is already used for interconnecting the sandwich panels 1, 2 to each other using aluminium profiles, can be used to interconnect the first and the second sandwich panel to each other. Preferably, the first and the second connecting means 10, 20 thereto are folded such that the first overlap part 1531 of the first sandwich panel 1, the first overlap part 1531, and the second overlap part 1532 of the second sandwich panel 2, the second overlap part 1532, are folded such that respectively a first and a second groove 301, 302 are created along the first upright side wall 11 of the first sandwich panel 1 adjacent to the first overlap part 1531 and the second upright side wall 21 of the second sandwich panel 2 is adjacent to the second overlap part 1532. Herein, the first groove 301 and the second groove 302 are provided to receive respectively a first thickened end part 304 of the eight-shaped profile 300 and a second thickened end part 304 of the eight-shaped profile 300 such that the two sandwich panels 1, 2 can be connected to each other. Such a third connecting element 300 with an eight-shaped cross-section is already known and such a cross-section is also called a "dogbone". Preferably, the element is longitudinal and provided to extend along the full length of the connecting means 10, 20. Such first 10, second 20 and third 300 connecting means are shown in figure 8.

Although figure 8 shows that the first 10 and the second 20 connecting means are no mirror reflections of each other, this is not critical for the invention. Preferably, the first 10 and the second 20 connecting means are substantially identical such that a plurality of such sandwich panels 1, 2 can be produced in a uniform way.

Although figure 8 shows that the first connecting means 10 end in an upwardly directed part, this is not critical for the invention and the connecting means 10 can also end in a part which is folded towards the core, as shown in the second connecting means 20. Although figure 8 shows that the respective edges of the respective cores of the respective sandwich panels 1, 2 from which the respective connecting means 10, 20 extend are not positioned adjacently, this is not critical for the invention and the connecting means 10, 20 can also extend from adjacent sides. Preferably, the connecting means 10, 20 of the two adjacently connected sandwich panels 1, 2 are mirror reflections of each other over a reflection axis in between the two sandwich panels 1, 2 along the first and second connecting means 10, 20.

## Claims

1. A sandwich panel (1) comprising a core (15, 25) with a first and second opposing surface (150, 155), in which the first surface (150) is provided with at least a first sheet (16) of a fibrous reinforcing material, the second surface (155) being provided with at least a second sheet (17) of a fibrous reinforcing material, wherein
- at least a first part (101) of the first sheet (16) which protrudes with respect to a first edge (151) of the first surface (150),
- at least a second part (102) of the second sheet (17) which protrudes with respect to a second edge (152) of the second surface (155) opposing the first edge (151), are adjacently positioned to define an overlap part (153) In which the first and second sheet at least partially overlap, in which the first part of the first sheet (101) and the second part of the second sheet (102) are connected in at least a part of the overlap part (153) by means of connecting fibers of fibrous reinforcing material, **characterized in that** the overlap part (153) is folded back along an upright side (154) of the core (15) at a distance from the upright side (154).

2. A sandwich panel according to claim 1 **characterized in that** the overlap art (153) can be provided at different positions relative to the upright side (154), near the upper side (150) of the core or panel at the lower side (155) of the core or panel, or at any position in between.

3. A sandwich panel according to any one of the preceding claims **characterized in that** the overlap part (153) extends with respect to the core (15) at the level of a bottom surface (155) of the core and a part of the overlap (153) is, at a distance from the upright side (154) of the core, folded back towards the first surface (150) of the core (15).

4. A sandwich panel according to any one of the preceding claims 1, **characterized in that** the first part of the first sheet (101) and the second part of the second sheet (102) are in at least a part of the overlap part (153) connected by means of continuous connecting fibers of fibrous reinforcing material (100).

5. A sandwich panel according to claim 4, **characterized in that** the connecting fibers (100) in the overlap part (153) extend in one or more directions selected from a height direction of the sandwich panel (1, 2) or at one or more angles from a height direction of the sandwich panel or a combination of two or more of these directions.

6. A sandwich panel according any one of claims 4 or 5, **characterized in that** the connecting fibers (100) are provided in a plurality of rows of connecting fibers, connected to each other and **in that** the overlap part (153) extends in the direction of the rows of connecting fibers (100) connected to each other.

7. A sandwich panel according to any one of claims 4 to 6, **characterized in that** the connecting fibers (100) are stitched, sewn, tufted or knitted or a combination of two or more of these techniques.

8. A sandwich panel according to any one of the preceding claims, **characterized in that** the sandwich panel and the overlap part (153) are impregnated with an uncured thermosetting resin or a thermoplastic material.

9. A sandwich panel according to any one of the preceding claims, **characterized in that** the overlap part (153) extends in longitudinal direction of the sandwich panel.

10. A sandwich panel according to any one of the preceding claims , **characterized in that** the overlap part (153) at one end (156), provides a protrusion (13).

11. A sandwich panel according to any one of the preceding claims, **characterized in that** the overlap part (153) is used as coupling means for connecting two or more sandwich panels.

12. A sandwich panel according to any one of the preceding claims, **characterized in that** the overlap part (153) can be applied along one side of the panel, or at opposite vertical sides of the panel.

13. A method for producing a sandwich panel (1) according to any one of the claims 1 to 12 in which a core (15) is supplied in a direction of movement, whereby to a first and second opposing surfaces (150, 155) of the core, respectively at least a first and second sheet (16, 17) of a fibrous reinforcing material is supplied, **characterized in that**
- a first part (101) of the first sheet (16), which protrudes with respect to a first edge (151) of the first surface (150) of the core and
- a second part (102) of the second sheet (17), which protrudes with respect to a second edge (152) of the second surface (155) of the core opposing a first edge (151), are adjacently positioned so that they at least partially overlap and overlap part (153) is determined at the core wherein the first and second part (101, 102) in at least part of the overlap part are connected by means of connecting fibers (100) of a fibrous reinforcing material, wherein the overlap part (153) is folded back along an upright side (154) of the core (15) at a distance from the upright side (154).

14. A method according to the previous claim, **characterized in that** the first sheet (16), the core (15) and the second sheet (17) are connected along at least part of the surface of the core by means of connecting fibers of a fibrous reinforcing material extending in the height direction of the sandwich structure.

15. A method according to the previous claim, **characterized in that** the sandwich panel after application of the connecting fibers (14, 100) is impregnated with a resin, preferably by pultrusion.

16. A method according to any one of claims 13 to 15, **characterized in that** the resin is chosen from a curable thermosetting resin which is cured or a thermoplastic material.

17. A method according to any one of claims 13 to 16. wherein a connecting fiber (100) makes use of continuous fibers, and where the connecting fibers (100) in the overlap part (153) extend in one or more directions selected from a height direction of the sandwich panel (1, 2) or at one or more angles to a height of the sandwich panel or a combination of two or more of these directions.

18. A method according to any one of claims 13 to 17, wherein the connecting fibers (100) are applied in the height direction of the sandwich structure in such a way that a plurality of rows of successive columns connecting fibers connected to each other are formed by moving the sandwich structure with respect to a connecting fiber application apparatus wherein successive columns connecting fibers are connected to each other in at least one direction, preferably in a direction in which the sandwich structure is moved with respect to the connecting fiber application apparatus.

19. A method according to any one of claims 13 to 18, wherein for applying the connecting fibers, a plurality of needles move through the sandwich structure and the overlap part (153), between a retracted position in which the needles do not penetrate the structure and a penetration position and wherein the sandwich structure and fiber connections application apparatus are moved with respect to each other in the retracted position of the needles.

20. A set comprising a first sandwich panel (1) according to any one of the claims 1 to 12 or a sandwich panel obtained by the method of any one of claims 13 to 19, provided with first connecting means (10) which at least partially extend along a first upright side wall (11) of the first sandwich panel (1) at a distance therefrom, a second sandwich panel (2) according to any one of claims 1 to 10 or a sandwich panel obtained by the method of one of claims 11 to 16, provided with second connecting means (20) which at least partially extend along a second upright side (21) of the second sandwich panel (2) at a distance therefrom for connecting the first and second sandwich panel (1, 2), in which at least one of the first connecting means (10) is executed as a single piece with the first sandwich panel (1) and at least a part of the second connecting means (20) is executed as a single piece with the second sandwich panel (2).

21. Set according to the previous claim, **characterized in that** the set also comprises third connecting means (3), wherein the first and second connection means (10, 20) on one hand and the third connection means (3) on the other hand comprise complementary co-operating parts, wherein the third connecting means (3) grip in the first and second connection means (10, 20) in the connection direction and height direction (Z) of the panels (1, 2) for keeping the first and second connection means (10, 20) directed at each other.

## Patentansprüche

1. Sandwichplatte (1), die einen Kern (15, 25) mit einer ersten und einer gegenüberliegenden zweiten Fläche (150, 155) aufweist, bei der die erste Fläche (150) mit mindestens einer ersten Schicht (16) aus faserigem Verstärkungsmaterial versehen ist und die zweite Fläche (155) mit mindestens einer zweiten Schicht (17) aus faserigem Verstärkungsmaterial versehen ist, wobei
- zumindest ein erster Abschnitt (101) der ersten Schicht (16), der in Bezug auf eine erste Kante (151) der ersten Fläche (150) hervorragt,
- und zumindest ein zweiter Abschnitt (102) der zweiten Schicht (17), der in Bezug auf eine zweite Kante (152) der zweiten Fläche (155) hervorragt, die der ersten Kante (151) gegenüberliegt, angrenzend aneinander angeordnet sind, so dass ein Überlappungsabschnitt (153) definiert ist, in dem sich die erste und die zweite Schicht zumindest teilweise überlappen, wobei der erste Abschnitt der ersten Schicht (101) und der zweite Abschnitt der zweiten Schicht (102) zumindest in einem Teil des Überlappungsabschnitts (153) durch Verbindungsfasern aus faserigem Verstärkungsmaterial verbunden sind, **dadurch gekennzeichnet, dass** der Überlappungsabschnitt (153) entlang einer aufrechten Seite (154) des Kerns (15) in einem Abstand zur aufrechten Seite (154) zurückgeklappt ist.

2. Sandwichplatte nach Anspruch 1, **dadurch gekennzeichnet, dass** der Überlappungsabschnitt (153) in Bezug auf die aufrechte Seite (154) in verschiedenen Positionen vorgesehen sein kann, in der Nähe der Oberseite (150) des Kerns oder der Platte, an der Unterseite (155) des Kerns oder der Platte oder in jeglicher dazwischen liegenden Position.

3. Sandwichplatte nach einem der vorhergehenden Ansprüche, **dadurch gekennzeichnet, dass** sich der Überlappungsabschnitt (153) in Bezug auf den Kern (15) auf Höhe einer unteren Fläche (155) des Kerns erstreckt und ein Teil der Überlappung (153) in einem Abstand zur aufrechten Seite (154) des Kerns zur ersten Fläche (150) des Kerns (15) hin zurückgeklappt ist.

4. Sandwichplatte nach einem der vorhergehenden Ansprüche, **dadurch gekennzeichnet, dass** der erste Abschnitt der ersten Schicht (101) und der zweite Abschnitt der zweiten Schicht (102) zumindest in einem Teil des Überlappungsabschnitts (153) durch durchgehende Verbindungsfasern aus faserigem Verstärkungsmaterial (100) verbunden sind.

5. Sandwichplatte nach Anspruch 4, **dadurch gekennzeichnet, dass** sich die Verbindungsfasern (100) in dem Überlappungsabschnitt (153) in mindestens eine Richtung, die aus einer Höhenrichtung der Sandwichplatte (1, 2) ausgewählt ist, oder unter mindestens einem Winkel in Bezug auf eine Höhenrichtung der Sandwichplatte oder gemäß einer Kombination aus mindestens zwei dieser Richtungen erstrecken.

6. Sandwichplatte nach einem der Ansprüche 4 oder 5, **dadurch gekennzeichnet, dass** die Verbindungsfasern (100) in mehreren Reihen von miteinander verbundenen Verbindungsfasern vorgesehen sind und sich der Überlappungsabschnitt (153) in die Richtung der Reihen von miteinander verbundenen Verbindungsfasern (100) erstreckt.

7. Sandwichplatte nach einem der Ansprüche 4 bis 6, **dadurch gekennzeichnet, dass** die Verbindungsfasern (100) gestickt, genäht, getuftet oder gewirkt oder gemäß einer Kombination aus mindestens zwei dieser Verfahren verarbeitet sind.

8. Sandwichplatte nach einem der vorhergehenden Ansprüche, **dadurch gekennzeichnet, dass** die Sandwichplatte und der Überlappungsabschnitt (153) mit einem ungehärteten, duroplastischen Harz oder einem thermoplastischen Material imprägniert sind.

9. Sandwichplatte nach einem der vorhergehenden Ansprüche, **dadurch gekennzeichnet, dass** sich der Überlappungsabschnitt (153) in Längsrichtung der Sandwichplatte erstreckt.

10. Sandwichplatte nach einem der vorhergehenden Ansprüche, **dadurch gekennzeichnet, dass** der Überlappungsabschnitt (153) an einem Ende (156) einen Vorsprung (13) bereitstellt.

11. Sandwichplatte nach einem der vorhergehenden Ansprüche, **dadurch gekennzeichnet, dass** der Überlappungsabschnitt (153) als Anschlussmittel zur Verbindung von mindestens zwei Sandwichplatten verwendet wird.

12. Sandwichplatte nach einem der vorhergehenden Ansprüche, **dadurch gekennzeichnet, dass** der Überlappungsabschnitt (153) entlang einer Seite der Platte oder an gegenüberliegenden senkrechten Seiten der Platte aufgebracht sein kann.

13. Verfahren zur Herstellung einer Sandwichplatte (1) nach einem der Ansprüche 1 bis 12, bei dem ein Kern (15) in eine Bewegungsrichtung zugeführt wird, wodurch einer ersten und einer gegenüberliegenden zweiten Fläche (150, 155) des Kerns zumindest eine erste bzw. eine zweite Schicht (16, 17) aus faserigem Verstärkungsmaterial zugeführt wird, **dadurch gekennzeichnet, dass**
- ein erster Abschnitt (101) der ersten Schicht (16), der in Bezug auf eine erste Kante (151) der ersten Fläche (150) des Kerns hervorragt, und
- ein zweiter Abschnitt (102) der zweiten Schicht (17), der in Bezug auf eine zweite Kante (152) der zweiten Fläche (155) des Kerns hervorragt, die der ersten Kante (151) gegenüberliegt, angrenzend aneinander angeordnet sind, so dass sie sich zumindest teilweise überlappen und ein Überlappungsabschnitt (153) am Kern bestimmt wird, wobei der erste und der zweite Abschnitt (101, 102) zumindest in einem Teil des Überlappungsabschnitts durch Verbindungsfasern (100) aus faserigem Verstärkungsmaterial verbunden sind, wobei der Überlappungsabschnitt (153) entlang einer aufrechten Seite (154) des Kerns (15) in einem Abstand zur aufrechten Seite (154) zurückgeklappt wird.

14. Verfahren nach dem vorhergehenden Anspruch, **dadurch gekennzeichnet, dass** die erste Schicht (16), der Kern (15) und die zweite Schicht (17) durch Verbindungsfasern aus faserigem Verstärkungsmaterial, die sich in Höhenrichtung der Sandwichstruktur erstrecken, entlang zumindest eines Teils der Fläche des Kerns verbunden sind.

15. Verfahren nach dem vorhergehenden Anspruch, **dadurch gekennzeichnet, dass** die Sandwichplatte nach dem Aufbringen der Verbindungsfasern (14, 100) mit einem Harz, vorzugsweise durch Zieh-Strangpressen imprägniert wird.

16. Verfahren nach einem der Ansprüche 13 bis 15, **dadurch gekennzeichnet, dass** das Harz aus einem härtbaren, duroplastischen Harz, das gehärtet wird, oder einem thermoplastischen Material ausgewählt ist.

17. Verfahren nach einem der Ansprüche 13 bis 16, bei dem bei einer Verbindungsfaser (100) durchgehende Fasern verwendet werden und sich die Verbindungsfasern (100) in dem Überlappungsabschnitt (153) in mindestens eine Richtung, die aus einer Höhenrichtung der Sandwichplatte (1, 2) ausgewählt ist, oder unter mindestens einem Winkel in Bezug auf eine Höhe der Sandwichplatte oder gemäß einer Kombination aus mindestens zwei dieser Richtungen erstrecken.

18. Verfahren nach einem der Ansprüche 13 bis 17, bei dem die Verbindungsfasern (100) so in Höhenrichtung der Sandwichstruktur aufgebracht werden, dass mehrere Reihen von aufeinanderfolgenden Spalten von miteinander verbundenen Verbindungsfasern durch Bewegen der Sandwichstruktur in Bezug auf eine Vorrichtung zum Aufbringen von Verbindungsfasern gebildet werden, wobei aufeinanderfolgende Spalte von Verbindungsfasern in mindestens einer Richtung, vorzugsweise in einer Richtung, in die die Sandwichstruktur in Bezug auf die Vorrichtung zum Aufbringen von Verbindungsfasern bewegt wird, miteinander verbunden werden.

19. Verfahren nach einem der Ansprüche 13 bis 18, bei dem zum Aufbringen der Verbindungsfasern sich mehrere Nadeln durch die Sandwichstruktur und den Überlappungsabschnitt (153) zwischen einer eingezogenen Stellung, in der die Nadeln nicht durch die Struktur dringen, und einer Durchdringstellung bewegen und wobei die Sandwichstruktur und die Vorrichtung zum Aufbringen von Verbindungsfasern in der eingezogenen Stellung der Nadeln zueinander bewegt werden.

20. Gruppe mit einer ersten Sandwichplatte (1) nach einem der Ansprüche 1 bis 12 oder einer mit dem Verfahren nach einem der Ansprüche 13 bis 19 erhaltenen Sandwichplatte, die mit ersten Verbindungsmitteln (10) versehen ist, die sich zumindest teilweise entlang einer ersten aufrechten Seitenwand (11) der ersten Sandwichplatte (1) in einem Abstand zu dieser erstrecken, und mit einer zweiten Sandwichplatte (2) nach einem der Ansprüche 1 bis 10 oder einer mit dem Verfahren nach einem der Ansprüche 11 bis 16 erhaltenen Sandwichplatte, die mit zweiten Verbindungsmitteln (20) versehen ist, die sich zumindest teilweise entlang einer zweiten aufrechten Seite (21) der zweiten Sandwichplatte (2) in einem Abstand zu dieser erstrecken, um die erste und die zweite Sandwichplatte (1, 2) zu verbinden, wobei mindestens eines der ersten Verbindungsmittel (10) einstückig mit der ersten Sandwichplatte (1) ausgeführt ist und zumindest ein Teil der zweiten Verbindungsmittel (20) einstückig mit der zweiten Sandwichplatte (2) ausgeführt ist.

21. Gruppe nach dem vorhergehenden Anspruch, **dadurch gekennzeichnet, dass** die Gruppe auch dritte Verbindungsmittel (3) aufweist, wobei einerseits die ersten und zweiten Verbindungsmittel (10, 20) und andererseits die dritten Verbindungsmittel (3) komplementäre zusammenwirkende Abschnitte aufweisen, wobei die dritten Verbindungsmittel (3) in Verbindungsrichtung und in Höhenrichtung (Z) der Platten (1, 2) in die ersten und zweiten Verbindungsmittel (10, 20) greifen, um die ersten und zweiten Verbindungsmittel (10, 20) zueinander gerichtet zu halten.

## Revendications

1. Panneau sandwich (1) comprenant un coeur (15, 25) avec des première et deuxième surfaces opposées (150, 155), dans lequel la première surface (150) est pourvue d'au moins une première feuille (16) d'un matériau de renforcement fibreux, la deuxième surface (155) étant pourvue d'au moins une deuxième feuille (17) d'un matériau de renforcement fibreux, dans lequel
- au moins une première partie (101) de la première feuille (16) qui fait saillie par rapport à un premier bord (151) de la première surface (150),
- au moins une deuxième partie (102) de la deuxième feuille (17) qui fait saillie par rapport à un deuxième bord (152) de la deuxième surface (155) à l'opposé du premier bord (151),
sont positionnées de manière adjacente pour définir une partie de chevauchement (153) dans lequel la première feuille et la deuxième feuille se chevauchent au moins partiellement, dans lequel la première partie de la première feuille (101) et la deuxième partie de la deuxième feuille (102) sont reliées dans au moins une partie de la partie de chevauchement (153) au moyen de fibres de liaison d'un matériau de renforcement fibreux, **caractérisé en ce que** la partie de chevauchement (153) est repliée le long d'un côté vertical (154) du coeur (15) à une distance du côté vertical (154).

2. Panneau sandwich selon la revendication 1, **caractérisé en ce que** la partie de chevauchement (153) peut être fournie à différentes positions par rapport au côté vertical (154), près du côté supérieur (150) du coeur ou du panneau, sur le côté inférieur (155) du coeur ou du panneau, ou à n'importe quelle position entre ceux-ci.

3. Panneau sandwich selon l'une quelconque des revendications précédentes, **caractérisé en ce que** la partie de chevauchement (153) s'étend par rapport au coeur (15) au niveau d'une surface inférieure (155) du coeur, et une partie du chevauchement (153) est, à une distance du côté vertical (154) du coeur, repliée vers la première surface (150) du coeur (15).

4. Panneau sandwich selon l'une quelconque des revendications précédentes, **caractérisé en ce que** la première partie de la première feuille (101) et la deuxième partie de la deuxième feuille (102) sont, dans au moins une partie de la partie de chevauchement (153), reliées au moyen de fibres de liaison continues d'un matériau de renforcement fibreux (100).

5. Panneau sandwich selon la revendication 4, **caractérisé en ce que** les fibres de liaison (100) dans la partie de chevauchement (153) s'étendent dans une ou plusieurs directions sélectionnées à partir d'une direction de hauteur du panneau sandwich (1, 2) ou à un ou plusieurs angles à partir d'une direction de hauteur du panneau sandwich ou une combinaison de deux de ces directions ou plus.

6. Panneau sandwich selon l'une quelconque des revendications 4 ou 5, **caractérisé en ce que** les fibres de liaison (100) sont fournies dans une pluralité de rangées de fibres de liaison, reliées l'une à l'autre, et **en ce que** la partie de chevauchement (153) s'étend dans la direction des rangées de fibres de liaison (100) reliées l'une à l'autre.

7. Panneau sandwich selon l'une quelconque des revendications 4 à 6, **caractérisé en ce que** les fibres de liaison (100) sont piquées, cousues, touffetées ou tricotées ou une combinaison de deux ou plus de ces techniques.

8. Panneau sandwich selon l'une quelconque des revendications précédentes, **caractérisé en ce que** le panneau sandwich et la partie de chevauchement (153) sont imprégnées d'une résine thermodurcissable non durcie ou d'un matériau thermoplastique.

9. Panneau sandwich selon l'une quelconque des revendications précédentes, **caractérisé en ce que** la partie de chevauchement (153) s'étend dans la direction longitudinale du panneau sandwich.

10. Panneau sandwich selon l'une quelconque des revendications précédentes, **caractérisé en ce que** la partie de chevauchement (153) à une extrémité (156) fournit une protubérance (13).

11. Panneau sandwich selon l'une quelconque des revendications précédentes, **caractérisé en ce que** la partie de chevauchement (153) est utilisée en tant que moyen de couplage pour relier deux panneaux sandwich ou plus.

12. Panneau sandwich selon l'une quelconque des revendications précédentes, **caractérisé en ce que** la partie de chevauchement (153) peut être appliquée le long d'un côté du panneau ou sur des côtés verticaux opposés du panneau.

13. Procédé de fabrication d'un panneau sandwich (1) selon l'une quelconque des revendications 1 à 12 dans lequel un coeur (15) est fourni dans une direction de déplacement, de telle manière qu'au moins des première et deuxième feuilles (16, 17) d'un matériau de renforcement fibreux soient respectivement fournis sur des première et deuxième surfaces opposées (150, 155) du coeur, **caractérisé en ce que** :
- une première partie (101) de la première feuille (16) qui fait saillie par rapport à un premier bord (151) de la première surface (150) du coeur et
- une deuxième partie (102) de la deuxième feuille (17) qui fait saillie par rapport à un deuxième bord (152) de la deuxième surface (155) du coeur à l'opposé d'un premier bord (151),
sont positionnées de manière adjacente afin de se chevaucher au moins partiellement et une partie de chevauchement (153) est déterminée au niveau du coeur, dans lequel les première et deuxième parties (101, 102) sont reliées dans au moins une partie de la partie de chevauchement au moyen de fibres de liaison (100) d'un matériau de renforcement fibreux, dans lequel la partie de chevauchement (153) est repliée le long d'un côté vertical (154) du coeur (15) à une distance du côté vertical (154).

14. Procédé selon la revendication précédente, **caractérisé en ce que** la première feuille (16), le coeur (15) et la deuxième feuille (17) sont reliés le long d'au moins une partie de la surface du coeur au moyen de fibres de liaison d'un matériau de renforcement fibreux s'étendant dans le sens de la hauteur de la structure sandwich.

15. Procédé selon la revendication précédente, **caractérisé en ce que** le panneau sandwich est imprégné, après l'application des fibres de liaison (14, 100), d'une résine, de préférence par pultrusion.

16. Procédé selon l'une quelconque des revendications 13 à 15, **caractérisé en ce que** la résine est choisie parmi une résine thermodurcissable qui est durcie ou un matériau thermoplastique.

17. Procédé selon l'une quelconque des revendications 13 à 16, dans lequel une fibre de liaison (100) utilise des fibres continues, et où les fibres de liaison (100) dans la partie de chevauchement (153) s'étendent dans une ou plusieurs directions sélectionnées à partir d'une direction de hauteur du panneau sandwich (1, 2) ou à un ou plusieurs angles par rapport à une hauteur du panneau sandwich ou une combinaison de deux de ces directions ou plus.

18. Procédé selon l'une quelconque des revendications 13 à 17, dans lequel les fibres de liaison (100) sont appliquées dans la direction de hauteur de la structure sandwich de manière à former une pluralité de rangées de fibres de liaison de colonnes successives reliées l'une à l'autre en déplaçant la structure sandwich par rapport à un appareil d'application de fibres de liaison, dans lequel des fibres de liaison de colonnes successives sont reliées l'une à l'autre dans au moins une direction, de préférence dans une direction dans laquelle la structure sandwich est déplacée par rapport à l'appareil d'application de fibres de liaison.

19. Procédé selon l'une quelconque des revendications 13 à 18, dans lequel, pour appliquer les fibres de liaison, une pluralité d'aiguilles se déplacent à travers la structure sandwich et la partie de chevauchement (153), entre une position rétractée à laquelle les aiguilles ne pénètrent pas dans la structure et une position de pénétration, et dans lequel la structure sandwich et l'appareil d'application de fibres de liaison sont déplacés l'un par rapport à l'autre à la position rétractée des aiguilles.

20. Ensemble comprenant un premier panneau sandwich (1) selon l'une quelconque des revendications 1 à 12 ou un panneau sandwich obtenu par le procédé selon l'une quelconque des revendications 13 à 19, pourvu de premiers moyens de liaison (10) qui s'étendent au moins partiellement le long d'une première paroi latérale verticale (11) du premier panneau sandwich (1) à une distance de celle-ci, un deuxième panneau sandwich (2) selon l'une quelconque des revendications 1 à 10 ou un panneau sandwich obtenu par le procédé selon l'une quelconque des revendications 11 à 16, pourvu de deuxièmes moyens de liaison (20) qui s'étendent au moins partiellement le long d'un deuxième côté vertical (21) du deuxième panneau sandwich (2) à une distance de celui-ci pour relier les premier et deuxième panneaux sandwich (1, 2), dans lequel au moins l'un des premiers moyens de liaison (10) fait partie intégrante du premier panneau sandwich (1) et au moins une partie des deuxièmes moyens de liaison (20) fait partie intégrante du deuxième panneau sandwich (2).

21. Ensemble selon la revendication précédente, **caractérisé en ce que** l'ensemble comprend également des troisièmes moyens de liaison (3), dans lequel les premiers et deuxièmes moyens de liaison (10, 20) d'une part et les troisièmes moyens de liaison (3) d'autre part comprennent des parties coopérantes complémentaires, dans lequel les troisièmes moyens de liaison (3) s'accrochent aux premiers et deuxièmes moyens de liaison (10, 20) dans la direction de liaison et dans la direction de hauteur (Z) des panneaux (1, 2) pour maintenir les premiers et deuxièmes moyens de liaison (10, 20) dirigés l'un vers l'autre.
